# EUROPEAN PATENT SPECIFICATION

(11) **EP 3 589 979 B1**
(45) Date of publication and mention of the grant of the patent: **26.10.2022**
(21) Application number: 18705932.4
(22) Date of filing: 22.02.2018
(51) Int. Cl.: G01S 19/07, G01S 19/41

(54) **METHOD, DEVICES, SYSTEM AND COMPUTER PROGRAM PRODUCT FOR INCREASING THE POSITIONING ACCURACY OF A MOBILE USER EQUIPMENT BY USING DATA OF A GLOBAL NAVIGATION SATELLITE SYSTEM**
VERFAHREN, VORRICHTUNGEN, SYSTEM UND COMPUTERPROGRAMMPRODUKT ZUR ERHÖHUNG DER STANDORTBESTIMMUNGSGENAUIGKEIT EINES MOBILEN ENDGERÄTES DURCH VERWENDUNG VON DATEN EINES GLOBALEN NAVIGATIONSSATELLITENSYSTEMS
PROCÉDÉ, DISPOSITIFS, SYSTÈME ET PRODUIT-PROGRAMME INFORMATIQUE POUR AUGMENTER LA PRÉCISION DE POSITIONNEMENT D'UN ÉQUIPEMENT D'UTILISATEUR MOBILE À L'AIDE DE DONNÉES D'UN SYSTÈME MONDIAL DE NAVIGATION PAR SATELLITES

(30) Priority: 03.03.2017 EP 17159097; 22.03.2017 EP 17162451
(43) Date of publication of application: 08.01.2020
(73) Proprietor: Deutsche Telekom AG, 53113 Bonn (DE)
(72) Inventor: KLATT, Axel, 50999 Köln (DE)
(74) Representative: Schwöbel, Thilo K.
(86) International application number: PCT/EP2018/054322
(87) International publication number: WO 2018/158125

(56) References cited:
- EP-A2- 2 275 832
- WO-A1-2004/095055
- WO-A1-2016/148989
- US-A1- 2002 198 657
- US-A1- 2013 293 412
- US-B1- 6 236 359

## Description

### BACKGROUND

The present invention relates to a method to increase the positioning accuracy of a mobile user equipment entity being connected to a mobile communication network by using data of a global navigation satellite system, wherein the mobile communication network comprises a plurality of base station entities and a plurality of reference stations, and wherein the global navigation satellite system comprises a plurality of satellites.

The present invention further relates to a mobile communication network as well as to a system for increasing the positioning accuracy of a mobile user equipment entity being connected to the mobile communication network by using data of a global navigation satellite system, wherein the mobile communication network comprises a plurality of base station entities and a plurality of reference stations, and wherein the global navigation satellite system comprises a plurality of satellites.

Additionally, the present invention relates to a corresponding mobile user equipment entity being able to be used in a system according to the present invention.

US 2002/198657 A1 discloses a method for producing GPS corrections. WO 2016/148989 A1 describes a location system ground station with fixed coordinates that may receive satellite broadcast messages from a plurality of location system satellites. In response, the ground station may determine location system coordinates based on the satellite broadcast messages, and compare the location system coordinates to the fixed coordinates to generate a compensation value. WO 2004 095055 A1 describes a method of obtaining tropospheric delay data for use in a satellite positioning system or GNSS. US 2013/293412 A1 describes a method for providing GNSS correction information (e.g., RTK correction information) to mobile devices (e.g., rovers) over the control plane of a cellular network. US 6 236 359 B1 relates to global positioning satellite systems and cellular networks.

Global navigation satellite systems (GNSS) are widely used for autonomous geo-spatial positioning. Global navigation satellite systems that are currently in service include Global Positioning System (GPS) and GLONASS. There are further global navigation satellite systems emerging, e.g. Galileo and BeiDou/COMPASS. For non-military use, those global navigation satellite systems provide basic positioning services with positioning accuracy in the range of typically serveral meters (such as 5 to 15 m and typically under comparatively good conditions).

Currently there are several methods available to increase the positioning accuracy of mobile user equipments being using global navigation satellite systems. Those methods are known as differential GPS (D-GPS) or real time kinematic (RTK) systems. The available methods rely on providing - to the mobile user equipments - correction information such as to enhance or increase the positioning accuracy of the mobile user equipment. The correction information is gathered using a reference station; the reference station typically receives a satellite radio signal transmitted by a plurality of satellites of at least one global navigation satellite system (i.e. the satellite radio signal received by the reference station normally comprises a plurality of individual satellite radio signals from individual satellites such as to allow for the determination of the position of the reference station, typically using triangulation methods). The position of the reference station, determined or calculated by means of the the satellite radio signal, is then compared to the known (because non-changing) position of the reference station, and the correction information is determined, enabling the mobile user equipment to correct for potential deviations in position.

Hence in RTK systems, an increased accuracy is possible compared to global navigation satellite system based positioning using GPS, Glonass, BeiDou or Galileo satellite positioning due to providing correction information to the mobile user equipment (also called "rover"). This enables precise positioning in the order of cm level accuracy. There are two modes of Network-RTK which allows an increased accuracy: The first mode provides so-called "area correction parameter" ("Flachenkorrekturparameter"), valid for a certain area, while in the other mode, the rover station can communicate with a server to get correction information specifically calculated for its position. The second mode is the more precise one and mainly used today; however, both modes lack an efficient transmission to a plurality of mobile user equipment entities.

### SUMMARY

An object of the present invention is to provide for an increased positioning accuracy of a mobile user equipment entity by using data of a global navigation satellite system, wherein the mobile user equipment entity is connected to a mobile communication network, and wherein an efficient transmission of correction information is possible while reducing costs and efforts for realizing as much coverage as possible and making such geographical correction information as widely available as possible, especially in view of applications ranging from intelligent transport system (ITS) applications (such as vehicle-to-vehicle communication, autonomous driving or the like) to construction, precision farming or the like, and especially using 5G (Fifth Generation) mobile communication systems.

The object of the present invention is achieved by a method according to claim 1.

Thereby, it is advantageously possible to increase the accuracy of positioning of mobile user equipment entities, make the corresponding correction information more widely available, and enables its use in a broad range of applications such as vehicle-to-vehicle communication, vehicle-to-infrastructure communication, autonomous driving or the like. Furthermore, the provision of the correction information in encrypted form and in a broadcast fashion could comparatively easily be provided by operators of mobile communication networks. Especially compared to conventionally known methods such as RTK correction data provision, it is advantageously possible according to the present invention that the transmission of such data is able to be performed efficiently. Especially considering cars, or, more generally, vehicles, using RTK for precise lane driving, it is impractical and inefficient (i.e. costly) to provide the data on a per user basis (i.e. for each car or rover or mobile user equipment entity) in a peer-to-peer fashion. Additionally, for most of the mass use cases an accuracy of 2 cm is not required, such that alternative distribution methods - compared to a per-user and a peer-to-peer fashion as used in conventionally known systems - is advantageously provided by the present invention.

According to the present invention, the increased positional accuracy (within the mobile user equipment entity) can be achieved by means of transmitting - using base station entities of the mobile communication network - correction information to the mobile user equipment entity (being connected to the mobile communication network). The correction information typically refers to (or is best suited for) a certain reference point or a reference location (within the radio coverage area of the base station entity considered), i.e. the positional accuracy the mobile user equipment entity is able to obtain using the correction information is best at or in close vicinity of such reference point or reference location. Hence, it is typical for conventional systems such as RTK systems that the correction data (or correction information) that a base station entity is providing is calculated for a certain position (such as, especially, the position or location of the considered (or specific) base station entity, e.g. an eNodeB), which typically leads to the positioning error being dependent on the difference (or distance) of the actual location of the mobile user equipment entity from the reference position: The correction data (or correction information) is calculated for the position of the specifc base station entity (which is precisely known and will not change in time), and the correction information broadcast only allows for an accurate positioning of the mobile user equipment entity in case that the mobile user equipment entity is located at the base station entity, and the more the distance of the mobile user equipment entity to the base station entity grows, the more the determination of the mobile user equipment entity's position will be imprecise.

According to the present invention, it is advantageously possible to not only considering one reference point (or reference location) but at least two of them, and preferably even more than two, such as three, four, five, or six reference points or more within the radio coverage area of the base station entity. Hence, it is proposed that the correction information comprises a first set of correction information (referring to a first reference point or region) indicating a first geographical correction and at least a second set of correction information (referring to a second reference point or region) indicating a second geographical correction, wherein the first geographical correction differs from the second geographical correction.

According to the present invention, the mobile communication network comprises a plurality of base station entities and a plurality of reference stations, wherein at least a specific reference station is associated to a specific base station entity, and wherein, in the first step, the specific reference station (of the pluratliy of reference stations) receives at least a first satellite radio signal; in the second step, subsequent to the first step, the specific reference station or a server entity of the mobile communication network calculates correction information (comprising both the first and second set of correction information); in the third step, subsequent to the second step, the correction information is transmitted to the mobile user equipment entity, such that the mobile user equipment entity is able - after having received a second satellite radio signal - to determine the position of the mobile user equipment entity based on the second satellite radio signal and, depending on the location of the mobile user equipment entity, at least one of the first geographical correction and the second geographical correction.

According to the present invention, the correction information, calculated in the second step, comprises
-- a first area information - besides the first geographical correction, and as part of the first set of correction information -, and
-- a second area information - besides the first geographical correction, and as part of the second set of correction information -,
wherein the first area information corresponds to a first geographical validity area at least partly within the radio coverage area of the specific base station entity, and wherein the second area information corresponds to a second geographical validity area at least partly within the radio coverage area of the specific base station entity.

Thereby, it is advantageously possible to explicitely transmit the information of a first and second geographical validity area such that the positional accuracy of the mobile user equipment entity is able to be increased.

It is disclosed that it is conceivable that the first and second area information, respectively, refer to different reference geographical zones or to different reference locations at least partly within the radio coverage area of the specific base station entity, wherein the different reference geographical zones or the different reference locations correspond to resource allocation zones used within the LTE-V2X framework defined by 3GPP (Third Generation Partnership Project) and/or are defined by means of at least one out of the following:
-- a polygon definition based on vertex point information,
-- a polygon definition based on edge information,
-- a polygon definition based on center point information and shape and/or size and/or orientation information,
-- an area within a certain distance from a reference location,
-- a reference location.

Thereby, it is advantageously possible to define the first and second area information in a flexible manner, and - according to a variant of the present invention - also differently from each other.

According to the present invention, the first area information refers to a first distance of the mobile user equipment entity from the location of the specific base station entity, wherein the second area information refers to a second distance of the mobile user equipment entity from the location of the specific base station entity, wherein the first and second distances are defined by different timing advance values - of radio signals transmitted between the specific base station entity and the mobile user equipment entity - as determined by the mobile user equipment entity.

Thereby, it is advantageously possible to easily define the first and second area information in terms of radio propagation parameters of radio signals travelling between the specific base station entity and the mobile user equipment entity, especially the timing advance parameter.

According to a preferred embodiment of the method according to the present invention, - in the fifth step and especially in case that the mobile user equipment entity is being determined to be located outside of or in an edge region of both the first and second geographical validity area -, the position of the mobile user equipment entity is determined based on the second satellite radio signal and both the first geographical correction and the second geographical correction, wherein especially an interpolation based on the first geographical correction and the second geographical correction is applied as geographical correction.

Thereby, it is advantageously possible to increase the positional accuracy of the mobile user equipment entity even in case it is located in an area outside of or in an edge region of both the first and second geographical validity area.

According to a preferred embodiment of the method according to the present invention, in the first step, the plurality of reference stations, of the mobile communication network, receive - from multiple satellites of the plurality of satellites of the global navigation satellite system - first satellite radio signals, and, in the second step, the server entity or the plurality of reference stations calculate(s) the correction information based on both the known geographical locations of the plurality of reference stations, and the first satellite radio signals received by the plurality of reference stations, wherein each reference station of the pluratliy of reference stations is especially located at one of the plurality of base station entities of the mobile communication network.

Thereby, it is advantageously possible to provide the communication service leading to higher positional accuracy of mobile user equipments even in larger geographical areas. By collocating the reference station at the site of the base station of the mobile communication network the infrastructure of the base station can be reused, thereby reducing installation efforts; accordingly, efforts for maintenance of the reference station can be reduced by servicing both the base station and collocated reference station with the same resources.

According to a preferred embodiment of the method according to the present invention, in the third step, the correction information is transmitted, by the specific base station entity of the plurality of base station entities, to a plurality of mobile user equipment entities as a broadcast message, especially in the same radio cell or radio coverage area of the specific base station entity, wherein especially each one of the plurality of base station entities broadcasts a respective correction information within the respective radio cell or the respective radio coverage area of the base station entity.

Thereby, it is advantageously possible to serve a plurality of mobile user equipments within the same radio coverage area of a base station entity with identical correction information, and nevertheless, each mobile user equipment entity is able to determine its position with high accuracy.

According to a preferred embodiment of the method according to the present invention, in the third step, the correction information is at least partly transmitted in an encrypted fashion, especially with regard to the first and second geographical correction.

Thereby, it is advantageously possible to enable a protection of the transmission of the correction information.

Further, the present invention also relates to a mobile communication network according to claim 6.

According to a preferred embodiment of the present invention, especially with respect to the mobile communication network, the mobile communication network comprises a plurality of base station entities and a plurality of reference stations, each reference station being associated to at least one of the plurality of base station entities, each reference station being configured to receive first satellite radio signals, and the server entity or the plurality of reference stations being configured to calculate the correction information based on both the known geographical locations of the plurality of reference stations, and the first satellite radio signals received by the plurality of reference stations.

Furthermore, the present invention relates to a system according to claim 8.

Furthermore, the present invention relates to a mobile user equipment entity according to claim 9.

Furthermore, the present invention relates to a program according to claim 10.

Furthermore, the present invention relates to a computer program product according to claim 11.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates an embodiment of a mobile communication network according to the present invention.
Figure 2 schematically illustrates a base station entity and a radio coverage area thereof in a system according to the prior art.
Figures 3 to 6 schematically illustrate a base station entity and a radio coverage area thereof as part of a system or a mobile communication network according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

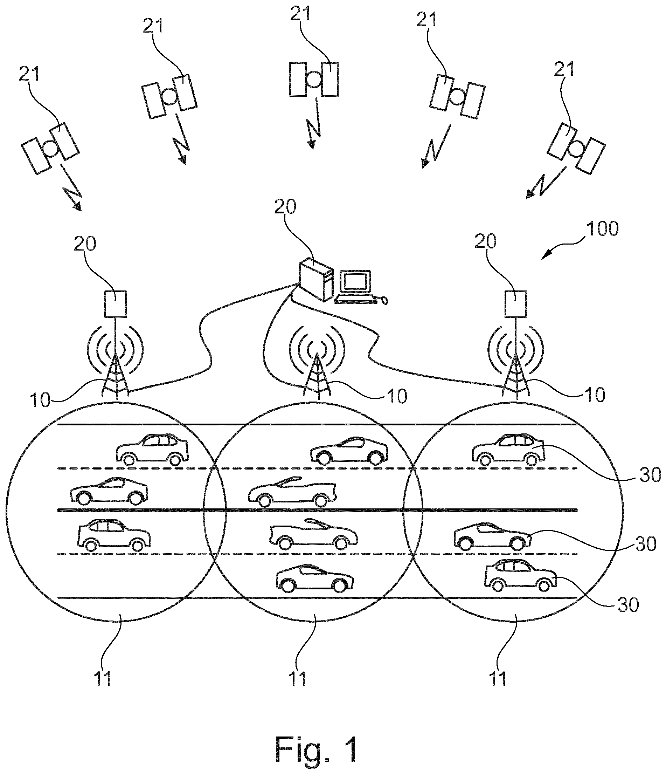

In Figure 1, a mobile communication network 100 is depicted that is capable of increasing positioning accuracy of global navigation satellite systems, e.g. GPS, GLONASS, BeiDou/COMPASS and Galileo. The mobile communication network 100 comprises a plurality of base station entities 10. The base station entities 10 each provide a radio cell 11 or a plurality of radio cells (i.e. provide a radio coverage area) such that a mobile user equipment 30 located in the radio cell 11 or radio coverage area of the respective base station entity 10 are able to communicate using the mobile communication network 100. In Figure 1 the mobile user equipment entities 30 are each symbolized by a vehicle. However, the mobile user equipment entity 30 may alternatively be in the form of a mobile phone, a smartphone, a mobile computer or a similar equipment.

The mobile communication network 100 further comprises a plurality of reference stations 20. The plurality of reference stations 20 are represented, in Figure 1, as being co-located with one of the base station entities 10 of the mobile communication network 100; however, this only refers to one embodiment of the present invention: In general, the locations of the reference stations 20 are not necessarily required to be co-located with the locations of the associated base station entities 10. The reference stations 20 are configured to receive a first satellite radio signals transmitted by typically a plurality of satellites 21 of the global navigation satellite system. Reference stations 20 might but are not necessarily required to be located at each base station 10 of the mobile communication network 100. As shown in Figure 1, the base station 10 depicted on the right and the base station 10 depicted on the left have a reference station 20 attached while the base station 10 in the middle does not have a reference station 20 attached to it. Alternatively, the mobile communication network 100 may be designed such that a reference station 20 is located at each base station 10 of the network, thereby achieving a density of reference stations 20 that is identical to the density of base stations 10.

The system according to the present invention also comprises a server entity 12 which is configured to calculate correction information based on the first satellite radio signal received by the reference stations 20 (and on known position coordinates of the reference stations 20). The server entity 12 may be located at one of the base stations 10 of the mobile communication network. Alternatively, the server may be implemented as a centralized server located remote from the base stations 10. The correction information is provided to the base station entities 10, which are configured to transmit the correction information to the mobile user equipment entities 30.

According to yet another alternative embodiment a plurality of server entities may be used within the inventive system. Thereby the server entities may process and provide correction information for a one base station entity, e.g. edge computing, or may serve a wider region of base station entities and radio cells, respectively.

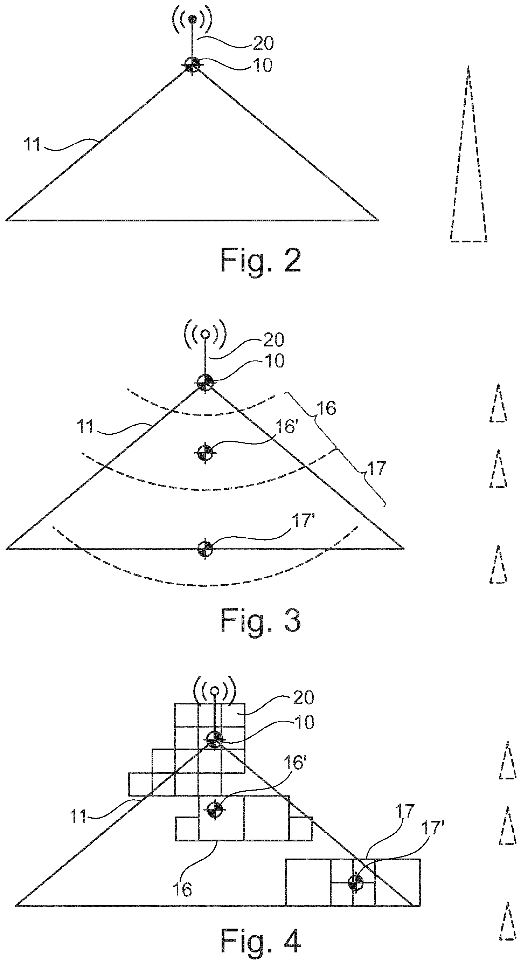

In Figure 2, a base station entity 10 and a radio coverage area (or radio cell 11) thereof is schematically shown in a system according to the prior art. In such a conventional system for providing correction information to a mobile user equipment entity 30, the correction information only provides the possibility to determine an accurate position in case that the mobile user equipment entity 30 (not depicted in Figure 2) is located at or near the location of the base station entity 10 and/or at or near the corresponding (or associated) reference station 20. This means that the positional accuracy is the more reduced (i.e. the positional error increased) the farther the mobile user equipment entity is located away from the base station entity 10 or the reference station 20. This is schematically represented, in Figure 1, by means of a dashed triangle on the right hand side, intended to show an increase of the positional error when applying the correction information being based on (or referring to) a reference point located at the base station entity 10 and/or at the reference station 20. According to the present invention, this is avoided, especially by means of the inventive method, system, and mobile communication network.

In the following, a method to increase positioning accuracy of global navigation satellite systems is described. The method comprises the following steps:
-- in a first step, a specific reference station of the plurality of reference stations 20 receives
- from multiple satellites of the plurality of satellites 21 of the global navigation satellite system - at least a first satellite radio signal, the specific reference station being associated to a specific base station entity of the plurality of base station entities 10 of the mobile communication network 100,
-- in a second step, subsequent to the first step, the specific reference station or a server entity 12 of the mobile communication network 100 calculates correction information based on the first satellite radio signal received by the specific reference station, wherein the correction information comprises a first set of correction information indicating a first geographical correction and at least a second set of correction information indicating a second geographical correction, wherein the first geographical correction differs from the second geographical correction,
-- in a third step, subsequent to the second step, the correction information is transmitted, by the specific base station entity of the plurality of base station entities 10, to the mobile user equipment entity 30,
-- in a fourth step, the mobile user equipment entity 30 receives - from multiple satellites of the plurality of satellites 21 of the global navigation satellite system - a second satellite radio signal,
-- in a fifth step, subsequent to the third step, the position of the mobile user equipment entity 30 is determined based on the second satellite radio signal and, depending on the location of the mobile user equipment entity 30, at least one of the first geographical correction and the second geographical correction.

Hence, it is proposed - in order to make use of the efficient broadcast transmission of RTK correction data and to achieve a reasonable precise location estimate even if more far away from the base station entity (as the reference for the calculated correction data) - to make several (i.e. at least two) sets of correction data (or correction information) available in a broadcast fashion in a cellular network. For example, it is proposed to calculate correction data for a number of reference points in the coverage area of a radio cell and then link the individual correction data to the appropriate position of the mobile user equipment entity. In other words: depending on where the mobile user equipment entity is currently located within the coverage area of a radio cell, different sets of correction data (or different sets of correction information) shall be used by the mobile user equipment entity. As the mobile user equipment entity is anyway already equipped with a receiver for global navigation satellite systems, it is able to determine its geographical position on its own and select the correct set of (RTK) correction information that is best suited for its current position from the multiple sets of correction information broadcast within the radio cell.

In Figures 3 to 6, different examples are schematically shown by means of a base station entity 10 and a radio coverage area (or radieo cell 11) thereof as part of a system or a mobile communication network according to the present invention. In each of Figures 3 to 6 a first geographical validity area 16, and a second geographical validity area 17 is schematically shown. The first geographical validity area 16 corresponds to a first area information, and the second geographical validity area 17 corresponds to a second area information. Additionally, a first reference point 16' is schematically shown within the first first geographical validity area 16, and a second reference point 17' is schematically shown within the second geographical validity area 17.

In Figure 3, which represents an embodiment of the present invention, the first area information refers to a first distance of the mobile user equipment entity 30 (likewise not shown in Figure 3) from the location of the specific base station entity 10, and the second area information refers to a second distance of the mobile user equipment entity 30 from the location of the specific base station entity 10. The first and second distances are defined by different values of a radio signal propagation parameter, especially by timing advance values, - of radio signals transmitted between the specific base station entity 10 and the mobile user equipment entity 30 - as determined by the mobile user equipment entity 30. This means that depending on the distance to the base station entity 10 - which can be calculated by the mobile user equipment entity 30 using the Timing Advance measurement - different sets of RTK correction data (i.e. different sets of correction information) shall be used by the mobile user equipment entity 30. On the right is shown that the positioning error can be minimised compared to the case of a single reference point at the base station entity and the single related RTK correction information.

In Figure 4, 5 and 6, which represent examples not covered by the present invention, the first and second area information are defined in terms of different geographical zones or regions within the radio coverage area served by the base station entity 10.

In Figure 4, the "V2V zoning concept of LTE-V" is used and schematically shown. This concept is described for example in [3GPP R2-163453; 3GPP R2-165836]. The mobile user equipment entity, especially a car equipped with LTE-V2X capabilities, is able to identity the LTE-V2x zone it is in and compares this with a reference of indicated zones and maps the zone(s) to the appropriate set of RTK correction information provided in the correction information broadcast. As illustrated in Figure 4, different zones are able to be defined for a given set of RTK correction information. As the LTE-V2X zoning concept is flexible in the size of zone definition, such a solution provides a flexible tool to map zones to sets of RTK correction information.

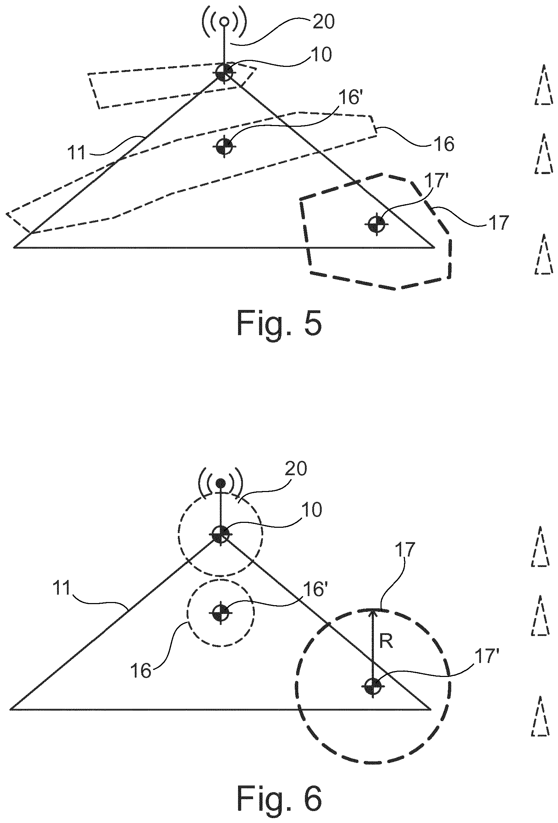

In Figure 5, the different RTK zones (i.e. first and second area information) are defined as free geographical polygons using a number of position reference points forming the polygon. The polygon definition should go in accordance with the selection of additional reference points; e.g. the polygon represented in the middle of Figure 5 might span a motorway, while the polygon on the right hand side could span an industrial area of a city for example. The mapping of polygons to RTK correction information sets is done in a similar fashion as in the other examples.

In Figure 6, it is shown that a reference point and a geographical radius around that reference point are used.

Preferably, the correction information is broadcast within the respective radio coverage area using (or having) a certain structure, such as:
-- Naming of the corresponding set of correction information "<RTK correction information broadcast>", defining the multiple sets of correction information that are valid within the radio cell or radio coverage area:
   -- set#1
   -- set#2
   -- set#3
   -- set#n
-- <linking information> (defining the linking between the mobile user equipment entity's location (zone, polygon etc) and the set of correction information to be used)
   -- Zone (A1:G5) := set#1
   -- Zone (F7:X9) := set#2 or
-- <linking information>
   -- Polygon1 (N xx.yyy; E xx:yyy ... := set#1
   -- Polygon2 (N xx.yyy; E xx:yyy ... := set#2

## Claims

1. Method to increase the positioning accuracy of a mobile user equipment entity (30) being connected to a mobile communication network (100) by using data of a global navigation satellite system, wherein the mobile communication network (100) comprises a plurality of base station entities (10) and a plurality of reference stations (20), and wherein the global navigation satellite system comprises a plurality of satellites (21), wherein the method comprises the following steps:
-- in a first step, a specific reference station of the plurality of reference stations (20) receives - from multiple satellites of the plurality of satellites (21) of the global navigation satellite system - at least a first satellite radio signal, the specific reference station being associated to a specific base station entity of the plurality of base station entities (10) of the mobile communication network (100),
-- in a second step, subsequent to the first step, the specific reference station or a server entity (12) of the mobile communication network (100) calculates correction information based on the first satellite radio signal received by the specific reference station, wherein the correction information comprises a first set of correction information indicating a first geographical correction and at least a second set of correction information indicating a second geographical correction, wherein the first geographical correction differs from the second geographical correction,
-- in a third step, subsequent to the second step, the correction information is transmitted, by the specific base station entity of the plurality of base station entities (10), to the mobile user equipment entity (30),
-- in a fourth step, the mobile user equipment entity (30) receives - from multiple satellites of the plurality of satellites (21) of the global navigation satellite system - a second satellite radio signal,
-- in a fifth step, subsequent to the third step, the position of the mobile user equipment entity (30) is determined based on the second satellite radio signal and, depending on the location of the mobile user equipment entity (30), at least one of the first geographical correction and the second geographical correction,
wherein the correction information, calculated in the second step, comprises
-- a first area information - besides the first geographical correction, and as part of the first set of correction information -, and
-- a second area information - besides the first geographical correction, and as part of the second set of correction information -,
wherein the first area information corresponds to a first geographical validity area (16) at least partly within the radio coverage area of the specific base station entity, and wherein the second area information corresponds to a second geographical validity area (17) at least partly within the radio coverage area of the specific base station entity,
**characterized in that** the first area information refers to a first distance of the mobile user equipment entity (30) from the location of the specific base station entity,
and the second area information refers to a second distance of the mobile user equipment entity (30) from the location of the specific base station entity, wherein the first and second distances are defined by different timing advance values - of radio signals transmitted between the specific base station entity and the mobile user equipment entity (30) - as determined by the mobile user equipment entity (30).

2. Method according to claim 1, wherein - in the fifth step and especially in case that the mobile user equipment entity (30) is being determined to be located outside of or in an edge region of both the first and second geographical validity area (16, 17) -, the position of the mobile user equipment entity (30) is determined based on the second satellite radio signal and both the first geographical correction and the second geographical correction, wherein especially an interpolation based on the first geographical correction and the second geographical correction is applied as geographical correction.

3. Method according to any of the preceding claims, wherein, in the first step, the plurality of reference stations (20), of the mobile communication network (100), receive - from multiple satellites of the plurality of satellites (21) of the global navigation satellite system - first satellite radio signals, and, in the second step, the server entity (12) or the plurality of reference stations (20) calculate(s) the correction information based on both the known geographical locations of the plurality of reference stations (20), and the first satellite radio signals received by the plurality of reference stations (20), wherein each reference station of the plurality of reference stations (20) is especially located at one of the plurality of base station entities (10) of the mobile communication network (100).

4. Method according to any of the preceding claims, wherein, in the third step, the correction information is transmitted, by the specific base station entity of the plurality of base station entities (10), to a plurality of mobile user equipment entities (30) as a broadcast message, especially in the same radio cell (11) or radio coverage area of the specific base station entity, wherein especially each one of the plurality of base station entities (10) broadcasts a respective correction information within the respective radio cell (11) or the respective radio coverage area of the base station entity.

5. Method according to any of the preceding claims, wherein, in the third step, the correction information is at least partly transmitted in an encrypted fashion, especially with regard to the first and second geographical correction.

6. Mobile communication network (100) for increasing the positioning accuracy of a mobile user equipment entity (30) being connected to the mobile communication network (100) by using data of a global navigation satellite system, wherein the mobile communication network (100) comprises a plurality of base station entities (10) and a plurality of reference stations (20), and wherein the global navigation satellite system comprises a plurality of satellites (21), wherein the mobile communication network (100) is configured such that:
-- a specific reference station (20) of the plurality of reference stations (20) receives
- from multiple satellites of the plurality of satellites (21) of the global navigation satellite system - at least a first satellite radio signal, the specific reference station being associated to a specific base station entity of the plurality of base station entities (10) of the mobile communication network (100),
-- the specific reference station or a server entity (12) of the mobile communication network (100) calculates correction information based on the first satellite radio signal received by the specific reference station, wherein the correction information comprises a first set of correction information indicating a first geographical correction and at least a second set of correction information indicating a second geographical correction, wherein the first geographical correction differs from the second geographical correction,
-- the correction information is transmitted, by the specific base station entity of the plurality of base station entities (10), to the mobile user equipment entity (30),
-- the mobile user equipment entity (30) is able to receive - from multiple satellites of the plurality of satellites (21) of the global navigation satellite system - a second satellite radio signal, and
-- the position of the mobile user equipment entity (30) is able to be determined based on the second satellite radio signal and, depending on the location of the mobile user equipment entity (30), at least one of the first geographical correction and the second geographical correction,
wherein the correction information comprises
-- a first area information - besides the first geographical correction, and as part of the first set of correction information -, and
-- a second area information - besides the first geographical correction, and as part of the second set of correction information -,
wherein the first area information corresponds to a first geographical validity area (16) at least partly within the radio coverage area of the specific base station entity, and wherein the second area information corresponds to a second geographical validity area (17) at least partly within the radio coverage area of the specific base station entity,
**characterized in that** the first area information refers to a first distance of the mobile user equipment entity (30) from the location of the specific base station entity,
and the second area information refers to a second distance of the mobile user equipment entity (30) from the location of the specific base station entity, wherein the first and second distances are defined by different timing advance values - of radio signals transmitted between the specific base station entity and the mobile user equipment entity (30) - as determined by the mobile user equipment entity (30).

7. Mobile communication network according to claim 6, wherein each reference station is associated to at least one of the plurality of base station entities (10), each reference station being configured to receive first satellite radio signals, and the server entity (12) or the plurality of reference stations (20) being configured to calculate the correction information based on both the known geographical locations of the plurality of reference stations (20), and the first satellite radio signals received by the plurality of reference stations (20).

8. System for increasing the positioning accuracy of a mobile user equipment entity (30) being connected to a mobile communication network (100) by using data of a global navigation satellite system, wherein the system comprises the mobile user equipment entity (30), the mobile communication network (100), and a plurality of reference stations (20) and a server entity (12), wherein the mobile communication network (100) comprises a plurality of base station entities (10), and wherein the global navigation satellite system comprises a plurality of satellites (21), wherein the system is configured such that:
-- a specific reference station (20) of the plurality of reference stations (20) receives
- from multiple satellites of the plurality of satellites (21) of the global navigation satellite system - at least a first satellite radio signal, the specific reference station being associated to a specific base station entity of the plurality of base station entities (10) of the mobile communication network (100),
-- the specific reference station or a server entity (12) of the mobile communication network (100) calculates correction information based on the first satellite radio signal received by the specific reference station, wherein the correction information comprises a first set of correction information indicating a first geographical correction and at least a second set of correction information indicating a second geographical correction, wherein the first geographical correction differs from the second geographical correction,
-- the correction information is transmitted, by the specific base station entity of the plurality of base station entities (10), to the mobile user equipment entity (30),
-- the mobile user equipment entity (30) receives - from multiple satellites of the plurality of satellites (21) of the global navigation satellite system - a second satellite radio signal, and
-- the position of the mobile user equipment entity (30) is determined, based on the second satellite radio signal and, depending on the location of the mobile user equipment entity (30), at least one of the first geographical correction and the second geographical correction,
wherein the correction information comprises
-- a first area information - besides the first geographical correction, and as part of the first set of correction information -, and
-- a second area information - besides the first geographical correction, and as part of the second set of correction information -,
wherein the first area information corresponds to a first geographical validity area (16) at least partly within the radio coverage area of the specific base station entity, and wherein the second area information corresponds to a second geographical validity area (17) at least partly within the radio coverage area of the specific base station entity,
**characterized in that** the first area information refers to a first distance of the mobile user equipment entity (30) from the location of the specific base station entity,
and the second area information refers to a second distance of the mobile user equipment entity (30) from the location of the specific base station entity, wherein the first and second distances are defined by different timing advance values - of radio signals transmitted between the specific base station entity and the mobile user equipment entity (30) - as determined by the mobile user equipment entity (30).

9. Mobile user equipment entity (30) configured to be used in a system according to claim 8, wherein the mobile user equipment entity (30) is configured - after having received the correction information and the second satellite radio signal - to determine the position of the mobile user equipment entity (30) based on the second satellite radio signal and, depending on the location of the mobile user equipment entity (30), at least one of the first geographical correction and the second geographical correction.

10. Computer program comprising a computer readable program code which, when executed in part on a reference station (20) and in part on a mobile user equipment entity (30) and optionally in part on a server entity (12), causes the reference station (20) and the mobile user equipment entity (30) and optionally the server entity (12) to perform a method according one of claims 1 to 5.

11. Computer program product for increasing the positioning accuracy of a mobile user equipment entity (30) being connected to a mobile communication network (100) by using data of a global navigation satellite system, the computer program product comprising a computer program according to claim 10 stored on a storage medium.

## Patentansprüche

1. Verfahren zum Erhöhen der Positionsbestimmungsgenauigkeit einer mobilen Benutzerausrüstungsentität (30), die mit einem Mobilkommunikationsnetz (100) verbunden ist, unter Verwendung von Daten eines globalen Navigationssatellitensystems, wobei das Mobilkommunikationsnetz (100) mehrere Basisstationsentitäten (10) und mehrere Referenzstationen (20) umfasst und wobei das globale Navigationssatellitensystem mehrere Satelliten (21) umfasst, wobei das Verfahren die folgenden Schritte umfasst:
- in einem ersten Schritt empfängt eine spezifische Referenzstation der mehreren Referenzstationen (20) - von mehreren Satelliten der mehreren Satelliten (21) des globalen Navigationssatellitensystems - mindestens ein erstes Satellitenfunksignal, wobei die spezifische Referenzstation einer spezifischen Basisstationsentität der mehreren Basisstationsentitäten (10) des Mobilkommunikationsnetzes (100) zugeordnet ist,
- in einem zweiten Schritt, im Anschluss an den ersten Schritt, berechnet die spezifische Referenzstation oder eine Serverentität (12) des Mobilkommunikationsnetzes (100) Korrekturinformationen auf der Grundlage des ersten Satellitenfunksignals, das durch die spezifische Referenzstation empfangen wird, wobei die Korrekturinformationen einen ersten Satz von Korrekturinformationen, die eine erste geographische Korrektur angeben, und mindestens einen zweiten Satz von Korrekturinformationen, die eine zweite geographische Korrektur angeben, umfassen, wobei sich die erste geographische Korrektur von der zweiten geographischen Korrektur unterscheidet,
- in einem dritten Schritt, im Anschluss an den zweiten Schritt, werden die Korrekturinformationen durch die spezifische Basisstationsentität der mehreren Basisstationsentitäten (10) an die mobile Benutzerausrüstungsentität (30) gesendet,
- in einem vierten Schritt empfängt die mobile Benutzerausrüstungsentität (30) - von mehreren Satelliten der mehreren Satelliten (21) des globalen Navigationssatellitensystems - ein zweites Satellitenfunksignal,
- in einem fünften Schritt, im Anschluss an den dritten Schritt, wird die Position der mobilen Benutzerausrüstungsentität (30) auf der Grundlage des zweiten Satellitenfunksignals und - in Abhängigkeit vom Standort der mobilen Benutzerausrüstungsentität (30) - mindestens einer der ersten geographischen Korrektur und der zweiten geographischen Korrektur bestimmt,
wobei die im zweiten Schritt berechneten Korrekturinformationen umfassen:
- erste Gebietsinformationen - neben der ersten geographischen Korrektur und als Teil des ersten Satzes von Korrekturinformationen - und
- zweite Gebietsinformationen - neben der ersten geographischen Korrektur, und als Teil des zweiten Satzes von Korrekturinformationen -,
wobei die ersten Gebietsinformationen einem ersten geografischen Gültigkeitsgebiet (16) entsprechen, das mindestens teilweise innerhalb des Funkversorgungsgebietes der spezifischen Basisstationsentität liegt, und
wobei die zweiten Gebietsinformationen einem zweiten geografischen Gültigkeitsgebiet (17) entsprechen, das mindestens teilweise innerhalb des Funkversorgungsgebietes der spezifischen Basisstationsentität liegt, und
**dadurch gekennzeichnet, dass** sich die ersten Gebietsinformationen auf eine erste Entfernung der mobilen Benutzerausrüstungsentität (30) von dem Standort der spezifischen Basisstationsentität beziehen und die zweiten Gebietsinformationen sich auf eine zweite Entfernung der mobilen Benutzerausrüstungsentität (30) von dem Standort der spezifischen Basisstationsentität beziehen, wobei die erste und die zweite Entfernung durch unterschiedliche Zeitvorlaufwerte - von Funksignalen, die zwischen der spezifischen Basisstationsentität und der mobilen Benutzerausrüstungsentität (30) gesendet werden - definiert werden, die durch die mobile Benutzerausrüstungsentität (30) bestimmt werden.

2. Verfahren nach Anspruch 1, wobei im fünften Schritt und insbesondere für den Fall, dass der Standort der mobilen Benutzerausrüstungsentität (30) als außerhalb oder innerhalb einer Randregion sowohl des ersten als auch des zweiten geographischen Gültigkeitsgebietes (16, 17) befindlich bestimmt wird, die Position der mobilen Benutzerausrüstungsentität (30) auf der Grundlage des zweiten Satellitenfunksignals und sowohl der ersten geographischen Korrektur als auch der zweiten geographischen Korrektur bestimmt wird, wobei insbesondere eine Interpolation auf der Grundlage der ersten geographischen Korrektur und der zweiten geographischen Korrektur als geographische Korrektur angewendet wird.

3. Verfahren nach einem der vorangehenden Ansprüche, wobei im ersten Schritt die mehreren Referenzstationen (20) des Mobilkommunikationsnetzes (100) von mehreren Satelliten der mehreren Satelliten (21) des globalen Navigationssatellitensystems erste Satellitenfunksignale empfangen und - im zweiten Schritt - die Serverentität (12) oder die mehreren Referenzstationen (20) die Korrekturinformationen auf der Grundlage sowohl der bekannten geographischen Standorte der mehreren Referenzstationen (20) als auch der durch die mehreren Referenzstationen (20) empfangenen ersten Satellitenfunksignale berechnet, wobei sich jede Referenzstation der mehreren Referenzstationen (20) insbesondere bei einer der mehreren Basisstationsentitäten (10) des Mobilkommunikationsnetzes (100) befindet.

4. Verfahren nach einem der vorangehenden Ansprüche, wobei im dritten Schritt die Korrekturinformationen durch die spezifische Basisstationsentität der mehreren Basisstationsentitäten (10) an mehrere mobile Benutzerausrüstungsentitäten (30) als eine Rundsendenachricht gesendet werden - insbesondere in derselben Funkzelle (11) oder demselben Funkversorgungsgebiet der spezifischen Basisstationsentität - wobei insbesondere jede der mehreren Basisstationsentitäten (10) jeweilige Korrekturinformationen innerhalb der jeweiligen Funkzelle (11) oder des jeweiligen Funkversorgungsgebietes der Basisstationsentität sendet.

5. Verfahren nach einem der vorangehenden Ansprüche, wobei im dritten Schritt die Korrekturinformationen, insbesondere hinsichtlich der ersten und zweiten geografischen Korrektur, mindestens teilweise verschlüsselt gesendet werden.

6. Mobilkommunikationsnetz (100) zum Erhöhen der Positionsbestimmungsgenauigkeit einer mobilen Benutzerausrüstungsentität (30), die mit dem Mobilkommunikationsnetz (100) verbunden ist, unter Verwendung von Daten eines globalen Navigationssatellitensystems, wobei das Mobilkommunikationsnetz (100) mehrere Basisstationsentitäten (10) und mehrere Referenzstationen (20) umfasst und wobei das globale Navigationssatellitensystem mehrere Satelliten (21) umfasst, wobei das Mobilkommunikationsnetz (100) so konfiguriert ist, dass:
- eine spezifische Referenzstation der mehreren Referenzstationen (20) - von mehreren Satelliten der mehreren Satelliten (21) des globalen Navigationssatellitensystems - mindestens ein erstes Satellitenfunksignal empfängt, wobei die spezifische Referenzstation einer spezifischen Basisstationsentität der mehreren Basisstationsentitäten (10) des Mobilkommunikationsnetzes (100) zugeordnet ist,
- die spezifische Referenzstation oder eine Serverentität (12) des Mobilkommunikationsnetzes (100) Korrekturinformationen auf der Grundlage des ersten Satellitenfunksignals, das durch die spezifische Referenzstation empfangen wird, berechnet, wobei die Korrekturinformationen einen ersten Satz von Korrekturinformationen, die eine erste geographische Korrektur angeben, und mindestens einen zweiten Satz von Korrekturinformationen, die eine zweite geographische Korrektur angeben, umfassen, wobei sich die erste geographische Korrektur von der zweiten geographischen Korrektur unterscheidet,
- die Korrekturinformationen durch die spezifische Basisstationsentität der mehreren Basisstationsentitäten (10) an die mobile Benutzerausrüstungsentität (30) gesendet werden,
- die mobile Benutzerausrüstungsentität (30) in der Lage ist, von mehreren Satelliten der mehreren Satelliten (21) des globalen Navigationssatellitensystems ein zweites Satellitenfunksignal zu empfangen, und
- die Position der mobilen Benutzerausrüstungsentität (30) auf der Grundlage des zweiten Satellitenfunksignals und - in Abhängigkeit vom Standort der mobilen Benutzerausrüstungsentität (30)
- mindestens einer der ersten geographischen Korrektur und der zweiten geographischen Korrektur bestimmt werden kann,
wobei die Korrekturinformationen umfassen:
- erste Gebietsinformationen - neben der ersten geographischen Korrektur und als Teil des ersten Satzes von Korrekturinformationen - und
- zweite Gebietsinformationen - neben der ersten geographischen Korrektur, und als Teil des zweiten Satzes von Korrekturinformationen -,
wobei die ersten Gebietsinformationen einem ersten geographischen Gültigkeitsgebiet (16) entsprechen, das sich mindestens teilweise innerhalb des Funkversorgungsgebietes der spezifischen Basisstationsentität befindet, und wobei die zweiten Gebietsinformationen einem zweiten geographischen Gültigkeitsgebiet (17) entsprechen, das sich mindestens teilweise innerhalb des Funkversorgungsgebietes der spezifischen Basisstationsentität befindet,
**dadurch gekennzeichnet, dass** sich die ersten Gebietsinformationen auf eine erste Entfernung der mobilen Benutzerausrüstungsentität (30) von dem Standort der spezifischen Basisstationsentität beziehen und die zweiten Gebietsinformationen sich auf eine zweite Entfernung der mobilen Benutzerausrüstungsentität (30) von dem Standort der spezifischen Basisstationsentität beziehen, wobei die erste und die zweite Entfernung durch unterschiedliche Zeitvorlaufwerte - von Funksignalen, die zwischen der spezifischen Basisstationsentität und der mobilen Benutzerausrüstungsentität (30) gesendet werden - definiert werden, die durch die mobile Benutzerausrüstungsentität (30) bestimmt werden.

7. Mobilkommunikationsnetz nach Anspruch 6, wobei jede Referenzstation mindestens einer der mehreren Basisstationsentitäten (10) zugeordnet ist, wobei jede Referenzstation so konfiguriert ist, dass sie erste Satellitenfunksignale empfängt, und wobei die Serverentität (12) oder die mehreren Referenzstationen (20) so konfiguriert sind, dass sie die Korrekturinformationen auf der Grundlage sowohl der bekannten geografischen Standorte der mehreren Referenzstationen (20) als auch der durch die mehreren Referenzstationen (20) empfangenen ersten Satellitenfunksignale berechnen.

8. System zum Erhöhen der Positionsbestimmungsgenauigkeit einer mobilen Benutzerausrüstungsentität (30), die mit einem Mobilkommunikationsnetz (100) verbunden ist, unter Verwendung von Daten eines globalen Navigationssatellitensystems, wobei das System die mobile Benutzerausrüstungsentität (30), das Mobilkommunikationsnetz (100) und mehrere Referenzstationen (20) und eine Serverentität (12) umfasst, wobei das Mobilkommunikationsnetz (100) mehrere Basisstationsentitäten (10) umfasst, und wobei das globale Navigationssatellitensystem mehrere Satelliten (21) umfasst, wobei das System so konfiguriert ist, dass:
- eine spezifische Referenzstation der mehreren Referenzstationen (20) - von mehreren Satelliten der mehreren Satelliten (21) des globalen Navigationssatellitensystems - mindestens ein erstes Satellitenfunksignal empfängt, wobei die spezifische Referenzstation einer spezifischen Basisstationsentität der mehreren Basisstationsentitäten (10) des Mobilkommunikationsnetzes (100) zugeordnet ist,
- die spezifische Referenzstation oder eine Serverentität (12) des Mobilkommunikationsnetzes (100) Korrekturinformationen auf der Grundlage des ersten Satellitenfunksignals, das durch die spezifische Referenzstation empfangen wird, berechnet, wobei die Korrekturinformationen einen ersten Satz von Korrekturinformationen, die eine erste geographische Korrektur angeben, und mindestens einen zweiten Satz von Korrekturinformationen, die eine zweite geographische Korrektur angeben, umfassen, wobei sich die erste geographische Korrektur von der zweiten geographischen Korrektur unterscheidet,
- die Korrekturinformationen durch die spezifische Basisstationsentität der mehreren Basisstationsentitäten (10) an die mobile Benutzerausrüstungsentität (30) gesendet werden,
- die mobile Benutzerausrüstungsentität (30) von mehreren Satelliten der mehreren Satelliten (21) des globalen Navigationssatellitensystems ein zweites Satellitenfunksignal empfängt und
- die Position der mobilen Benutzerausrüstungsentität (30) auf der Grundlage des zweiten Satellitenfunksignals und - in Abhängigkeit vom Standort der mobilen Benutzerausrüstungsentität (30)
- mindestens einer der ersten geographischen Korrektur und der zweiten geographischen Korrektur bestimmt wird,
wobei die Korrekturinformationen umfassen:
- erste Gebietsinformationen - neben der ersten geographischen Korrektur und als Teil des ersten Satzes von Korrekturinformationen - und
- zweite Gebietsinformationen - neben der ersten geographischen Korrektur, und als Teil des zweiten Satzes von Korrekturinformationen -,
wobei die ersten Gebietsinformationen einem ersten geographischen Gültigkeitsgebiet (16) entsprechen, das sich mindestens teilweise innerhalb des Funkversorgungsgebietes der spezifischen Basisstationsentität befindet, und wobei die zweiten Gebietsinformationen einem zweiten geographischen Gültigkeitsgebiet (17) entsprechen, das sich mindestens teilweise innerhalb des Funkversorgungsgebietes der spezifischen Basisstationsentität befindet,
**dadurch gekennzeichnet, dass** sich die ersten Gebietsinformationen auf eine erste Entfernung der mobilen Benutzerausrüstungsentität (30) von dem Standort der spezifischen Basisstationsentität beziehen und die zweiten Gebietsinformationen sich auf eine zweite Entfernung der mobilen Benutzerausrüstungsentität (30) von dem Standort der spezifischen Basisstationsentität beziehen, wobei die erste und die zweite Entfernung durch unterschiedliche Zeitvorlaufwerte - von Funksignalen, die zwischen der spezifischen Basisstationsentität und der mobilen Benutzerausrüstungsentität (30) gesendet werden - definiert werden, die durch die mobile Benutzerausrüstungsentität (30) bestimmt werden.

9. Mobile Benutzerausrüstungsentität (30), die so konfiguriert ist, dass sie in einem System nach Anspruch 8 verwendet werden kann, wobei die mobile Benutzerausrüstungsentität (30) so konfiguriert ist, dass sie - nachdem sie die Korrekturinformationen und das zweiten Satellitenfunksignal empfangen hat - die Position der mobilen Benutzerausrüstungsentität (30) auf der Grundlage des zweiten Satellitenfunksignals und - in Abhängigkeit vom Standort der mobilen Benutzerausrüstungsentität (30) - mindestens eine der ersten geografischen Korrektur und der zweiten geografischen Korrektur bestimmt.

10. Computerprogramm, das einen computerlesbaren Programmcode umfasst, der, wenn er teilweise in einer Referenzstation (20) und teilweise in einer mobilen Benutzerausrüstungsentität (30) und optional teilweise in einer Serverentität (12) ausgeführt wird, die Referenzstation (20) und die mobile Benutzerausrüstungsentität (30) und optional die Serverentität (12) veranlasst, ein Verfahren nach einem der Ansprüche 1 bis 5 auszuführen.

11. Computerprogrammprodukt zum Erhöhen der Positionsbestimmungsgenauigkeit einer mobilen Benutzerausrüstungsentität (30), die mit einem Mobilkommunikationsnetz (100) verbunden ist, unter Verwendung von Daten eines globalen Navigationssatellitensystems, wobei das Computerprogrammprodukt ein auf einem Speichermedium gespeichertes Computerprogramm nach Anspruch 10 umfasst.

## Revendications

1. Procédé permettant d'accroître la précision de positionnement d'une entité équipement d'utilisateur mobile (30) connectée à un réseau de communication mobile (100) en utilisant les données d'un système mondial de navigation par satellite, dans lequel le réseau de communication mobile (100) comprend une pluralité d'entités stations de base (10) et une pluralité de stations de référence (20), et dans lequel le système mondial de navigation par satellite comprend une pluralité de satellites (21), dans lequel le procédé comprend les étapes suivantes :
- dans une première étape, une station de référence spécifique de la pluralité de stations de référence (20) reçoit - en provenance de plusieurs satellites de la pluralité de satellites (21) du système mondial de navigation par satellite - au moins un premier signal radioélectrique de satellite, la station de référence spécifique étant associée à une entité station de base spécifique de la pluralité d'entités stations de base (10) du réseau de communication mobile (100),
- dans une deuxième étape faisant suite à la première étape, la station de référence spécifique ou une entité serveur (12) du réseau de communication mobile (100) calcule des informations de correction sur la base du premier signal radioélectrique de satellite, reçu par la station de référence spécifique, dans lequel les informations de correction comprennent un premier ensemble d'informations de correction indiquant une première correction géographique et au moins un second ensemble d'informations de correction indiquant une seconde correction géographique, dans lequel la première correction géographique diffère de la seconde correction géographique,
- dans une troisième étape faisant suite à la deuxième étape, les informations de correction sont transmises, par l'entité station de base spécifique de la pluralité d'entités stations de base (10), à l'entité équipement d'utilisateur mobile (30),
- dans une quatrième étape, l'entité équipement d'utilisateur mobile (30) reçoit - en provenance de plusieurs satellites de la pluralité de satellites (21) du système mondial de navigation par satellite - un second signal radioélectrique de satellite,
- dans une cinquième étape faisant suite à la troisième étape, la position de l'entité équipement d'utilisateur mobile (30) est déterminée sur la base du second signal radioélectrique de satellite et, en fonction de l'emplacement de l'entité équipement d'utilisateur mobile (30), d'au moins l'une des première et seconde corrections géographiques,
dans lequel les informations de correction, calculées dans la deuxième étape, comprennent :
- une première information de zone - outre la première correction géographique et dans le cadre du premier ensemble d'informations de correction -, et
- une seconde information de zone - outre la première correction géographique et dans le cadre du second ensemble d'informations de correction -,
dans lequel la première information de zone correspond à une première zone de validité géographique (16) au moins en partie au sein de la zone de couverture radioélectrique de l'entité station de base spécifique, et
dans lequel la seconde information de zone correspond à une seconde zone de validité géographique (17) au moins en partie au sein de la zone de couverture radioélectrique de l'entité station de base spécifique,
**caractérisé en ce que** la première information de zone désigne une première distance de l'entité équipement d'utilisateur mobile (30) par rapport à l'emplacement de l'entité station de base spécifique, et
la seconde information de zone désigne une seconde distance de l'entité équipement d'utilisateur mobile (30) par rapport à l'emplacement de l'entité station de base spécifique, dans lequel les première et seconde distances sont définies par des valeurs d'avance de synchronisation différentes - de signaux radioélectriques transmis entre l'entité station de base spécifique et l'entité équipement d'utilisateur mobile (30) - telles que déterminées par l'entité équipement d'utilisateur mobile (30).

2. Procédé selon la revendication 1, dans lequel - dans la cinquième étape et en particulier dans le cas où il est déterminé que l'entité équipement d'utilisateur mobile (30) est située hors ou à l'intérieur d'une région périphérique à la fois de la première et de la seconde zone de validité géographique (16, 17) -, la position de l'entité équipement d'utilisateur mobile (30) est déterminée sur la base du second signal radioélectrique de satellite et à la fois de la première correction géographique et de la seconde correction géographique, dans lequel une interpolation sur la base de la première correction géographique et de la seconde correction géographique est appliquée en tant que correction géographique.

3. Procédé selon l'une quelconque des revendications précédentes, dans lequel, dans la première étape, la pluralité de stations de référence (20) du réseau de communication mobile (100) reçoit - en provenance de plusieurs satellites de la pluralité de satellites (21) du système mondial de navigation par satellite - des premiers signaux radioélectriques de satellites, et, dans la deuxième étape, l'entité serveur (12) ou la pluralité de stations de référence (20) calcule les informations de correction sur la base à la fois des emplacements géographiques connus de la pluralité de stations de référence (20) et des premiers signaux radioélectriques de satellites, reçus par la pluralité de stations de référence (20), dans lequel chaque station de référence de la pluralité de stations de référence (20) est située en particulier au niveau d'une entité station de base de la pluralité d'entités stations de base (10) du réseau de communication mobile (100).

4. Procédé selon l'une quelconque des revendications précédentes, dans lequel, dans la troisième étape, les informations de correction sont transmises, par l'entité station de base spécifique de la pluralité d'entités stations de base (10), à une pluralité d'entités équipements d'utilisateurs mobiles (30) sous la forme d'un message de diffusion, en particulier dans la même cellule radioélectrique (11) ou zone de couverture radioélectrique de l'entité station de base spécifique, dans lequel, en particulier, chaque entité station de base de la pluralité d'entités stations de base (10) diffuse une information de correction respective au sein de la cellule radioélectrique (11) respective ou de la zone de couverture radioélectrique respective de l'entité station de base.

5. Procédé selon l'une quelconque des revendications précédentes, dans lequel, dans la troisième étape, les informations de correction sont au moins en partie transmises de manière chiffrée, en particulier en ce qui concerne la première et la seconde correction géographique.

6. Réseau de communication mobile (100) permettant d'accroître la précision de positionnement d'une entité équipement d'utilisateur mobile (30) connectée au réseau de communication mobile (100) en utilisant les données d'un système mondial de navigation par satellite, dans lequel le réseau de communication mobile (100) comprend une pluralité d'entités stations de base (10) et une pluralité de stations de référence (20), et dans lequel le système mondial de navigation par satellite comprend une pluralité de satellites (21), dans lequel le réseau de communication mobile (100) est configuré de manière que :
- une station de référence spécifique (20) de la pluralité de stations de référence (20) reçoive - en provenance de plusieurs satellites de la pluralité de satellites (21) du système mondial de navigation par satellite - au moins un premier signal radioélectrique de satellite, la station de référence spécifique étant associée à une entité station de base spécifique de la pluralité d'entités stations de base (10) du réseau de communication mobile (100),
- la station de référence spécifique ou une entité serveur (12) du réseau de communication mobile (100) calcule des informations de correction sur la base du premier signal radioélectrique de satellite, reçu par la station de référence spécifique, dans lequel les informations de correction comprennent un premier ensemble d'informations de correction indiquant une première correction géographique et au moins un second ensemble d'informations de correction indiquant une seconde correction géographique, dans lequel la première correction géographique diffère de la seconde correction géographique,
- les informations de correction soient transmises, par l'entité station de base spécifique de la pluralité d'entités stations de base (10), à l'entité équipement d'utilisateur mobile (30),
- l'entité équipement d'utilisateur mobile (30) puisse recevoir - en provenance de plusieurs satellites de la pluralité de satellites (21) du système mondial de navigation par satellite - un second signal radioélectrique de satellite, et
- la position de l'entité équipement d'utilisateur mobile (30) puisse être déterminée sur la base du second signal radioélectrique de satellite et, en fonction de l'emplacement de l'entité équipement d'utilisateur mobile (30), d'au moins l'une des première et seconde corrections géographiques,
dans lequel les informations de correction comprennent :
- une première information de zone - outre la première correction géographique et dans le cadre du premier ensemble d'informations de correction -, et
- une seconde information de zone - outre la première correction géographique et dans le cadre du second ensemble d'informations de correction -,
dans lequel la première information de zone correspond à une première zone de validité géographique (16) au moins en partie au sein de la zone de couverture radioélectrique de l'entité station de base spécifique, et dans lequel la seconde information de zone correspond à une seconde zone de validité géographique (17) au moins en partie au sein de la zone de couverture radioélectrique de l'entité station de base spécifique,
**caractérisé en ce que** la première information de zone désigne une première distance de l'entité équipement d'utilisateur mobile (30) par rapport à l'emplacement de l'entité station de base spécifique, et
la seconde information de zone désigne une seconde distance de l'entité équipement d'utilisateur mobile (30) par rapport à l'emplacement de l'entité station de base spécifique, dans lequel les première et seconde distances sont définies par des valeurs d'avance de synchronisation différentes - de signaux radioélectriques transmis entre l'entité station de base spécifique et l'entité équipement d'utilisateur mobile (30) - telles que déterminées par l'entité équipement d'utilisateur mobile (30).

7. Réseau de communication mobile selon la revendication 6, dans lequel chaque station de référence est associée à au moins une entité station de base de la pluralité d'entités stations de base (10), chaque station de référence étant configurée pour recevoir des premiers signaux radioélectriques de satellites, et l'entité serveur (12) ou la pluralité de stations de référence (20) étant configurée pour calculer les informations de correction sur la base à la fois des emplacements géographiques connus de la pluralité de stations de référence (20) et des premiers signaux radioélectriques de satellites, reçus par la pluralité de stations de référence (20).

8. Système permettant d'accroître la précision de positionnement d'une entité équipement d'utilisateur mobile (30) connectée à un réseau de communication mobile (100) en utilisant les données d'un système mondial de navigation par satellite, dans lequel le système comprend l'entité équipement d'utilisateur mobile (30), le réseau de communication mobile (100), ainsi qu'une pluralité de stations de référence (20) et une entité serveur (12), dans lequel le réseau de communication mobile (100) comprend une pluralité d'entités stations de base (10), et dans lequel le système mondial de navigation par satellite comprend une pluralité de satellites (21), dans lequel le système est configuré de manière que :
- une station de référence spécifique (20) de la pluralité de stations de référence (20) reçoive - en provenance de plusieurs satellites de la pluralité de satellites (21) du système mondial de navigation par satellite - au moins un premier signal radioélectrique de satellite, la station de référence spécifique étant associée à une entité station de base spécifique de la pluralité d'entités stations de base (10) du réseau de communication mobile (100),
- la station de référence spécifique ou une entité serveur (12) du réseau de communication mobile (100) calcule des informations de correction sur la base du premier signal radioélectrique de satellite, reçu par la station de référence spécifique, dans lequel les informations de correction comprennent un premier ensemble d'informations de correction indiquant une première correction géographique et au moins un second ensemble d'informations de correction indiquant une seconde correction géographique, dans lequel la première correction géographique diffère de la seconde correction géographique,
- les informations de correction soient transmises, par l'entité station de base spécifique de la pluralité d'entités stations de base (10), à l'entité équipement d'utilisateur mobile (30),
- l'entité équipement d'utilisateur mobile (30) reçoive
- en provenance de plusieurs satellites de la pluralité de satellites (21) du système mondial de navigation par satellite - un second signal radioélectrique de satellite, et
- la position de l'entité équipement d'utilisateur mobile (30) soit déterminée sur la base du second signal radioélectrique de satellite et, en fonction de l'emplacement de l'entité équipement d'utilisateur mobile (30), d'au moins l'une des première et seconde corrections géographiques,
dans lequel les informations de correction comprennent :
- une première information de zone - outre la première correction géographique et dans le cadre du premier ensemble d'informations de correction -, et
- une seconde information de zone - outre la première correction géographique et dans le cadre du second ensemble d'informations de correction -,
dans lequel la première information de zone correspond à une première zone de validité géographique (16) au moins en partie au sein de la zone de couverture radioélectrique de l'entité station de base spécifique, et
dans lequel la seconde information de zone correspond à une seconde zone de validité géographique (17) au moins en partie au sein de la zone de couverture radioélectrique de l'entité station de base spécifique,
**caractérisé en ce que** la première information de zone désigne une première distance de l'entité équipement d'utilisateur mobile (30) par rapport à l'emplacement de l'entité station de base spécifique, et
la seconde information de zone désigne une seconde distance de l'entité équipement d'utilisateur mobile (30) par rapport à l'emplacement de l'entité station de base spécifique, dans lequel les première et seconde distances sont définies par des valeurs d'avance de synchronisation différentes - de signaux radioélectriques transmis entre l'entité station de base spécifique et l'entité équipement d'utilisateur mobile (30) - telles que déterminées par l'entité équipement d'utilisateur mobile (30).

9. Entité équipement d'utilisateur mobile (30) configurée pour être utilisée dans un système selon la revendication 8, dans laquelle l'entité équipement d'utilisateur mobile (30) est configurée pour - après avoir reçu les informations de correction et le second signal radioélectrique de satellite
- déterminer la position de l'entité équipement d'utilisateur mobile (30) sur la base du second signal radioélectrique de satellite et, en fonction de l'emplacement de l'entité équipement d'utilisateur mobile (30), d'au moins l'une des première et seconde corrections géographiques,

10. Programme informatique comprenant un code de programme lisible par ordinateur, qui, lorsqu'il est exécuté en partie sur une station de référence (20) et en partie sur une entité équipement d'utilisateur mobile (30) et éventuellement en partie sur une entité serveur (12), fait mettre en œuvre à la station de référence (20) et à l'entité équipement d'utilisateur mobile (30) et éventuellement à l'entité serveur (12) un procédé selon l'une des revendications 1 à 5.

11. Produit-programme informatique permettant d'accroître la précision de positionnement d'une entité équipement d'utilisateur mobile (30) connectée à un réseau de communication mobile (100) en utilisant les données d'un système mondial de navigation par satellite, le produit-programme informatique comprenant un programme informatique selon la revendication 10, stocké sur un support de stockage.
